# EUROPEAN PATENT SPECIFICATION

(11) **EP 3 994 760 B1**
(45) Date of publication and mention of the grant of the patent: **09.08.2023**
(21) Application number: 20734557.0
(22) Date of filing: 29.06.2020
(51) Int. Cl.: H01M 50/403, H01M 50/40, H01M 50/409, H01M 10/052, H01M 50/417, H01M 50/42, H01M 50/423, H01M 50/426, H01M 50/449, H01M 50/46

(54) **BATTERY SEPARATOR COATING**
BATTERIESEPARATORBESCHICHTUNG
REVÊTEMENT DE SÉPARATEUR DE BATTERIE

(30) Priority: 01.07.2019 EP 19183740
(43) Date of publication of application: 11.05.2022
(73) Proprietor: Solvay Specialty Polymers Italy S.p.A., 20021 Bollate (MI) (IT)
(72) Inventor: BISO, Maurizio, 20125 Milano MI (IT); SOLMI, Matilde Valeria, 20020 Arese MI (IT)
(74) Representative: Benvenuti, Federica
(86) International application number: PCT/EP2020/068213
(87) International publication number: WO 2021/001302

(56) References cited:
- WO-A1-2007/054543
- WO-A1-2013/120858
- WO-A1-2019/096799
- JP-A- 2016 081 711

## Description

### Technical Field

The present invention pertains to an aqueous composition comprising salified polyamide-imide polymers and polyvinylidene fluoride and its use for the manufacture of electrochemical cell components, such as separators.

### Background Art

Lithium-ion batteries have become essential in our daily life. In the context of sustainable development, they are expected to play a more important role because they have attracted increasing attention for uses in electric vehicles and renewable energy storage.

Separator layers are important components of batteries. These layers serve to prevent contact of the positive electrode and a negative electrode of the battery while permitting electrolyte to pass there through. Additionally, battery performance attributes such as cycle life and power can be significantly affected by the choice of separator.

In a current-technology lithium secondary battery, a polyolefin-based porous film having a thickness of 6 to 30 micrometres is used as a separator. For the material of the separator, polyethylene (PE) having a low melting point can be used for securing a so-called shutdown effect, namely, melting a resin of the separator at or below a thermal runaway (abnormal heating) temperature of the battery so as to close the pores, thereby increasing the internal resistance of the battery and improving the safety of the battery at the time of short-circuit or the like.

For the separator, for example, a uniaxially or biaxially stretched film is used in order to provide porosity and improve the strength. Distortion occurs in the film due to the stretching, and thus when exposed to a high temperature, contraction will occur due to residual stress. The contraction temperature is extremely closer to the melting point, that is, the shutdown temperature. As a result, in a case of using a polyolefin-based porous film separator, when the temperature of the battery reaches the shutdown temperature due to anomalies in charging or the like, the current must be decreased immediately for preventing the battery temperature from rising. If the pores are not closed sufficiently and the current cannot be decreased immediately, the battery temperature will be raised easily to the contraction temperature of the separator, causing a risk of thermal runaway due to internal short-circuit.

In order to prevent a short-circuit caused by the thermal contraction, methods of using separators of a microporous film of heat-resistant resin or a nonwoven fabric have been proposed. For example, EP3054502 (ASAHI KASEI KABUSHIKI KAISHA) discloses a separator formed of a porous film having a polyolefin microporous film and a thermoplastic polymer coating layer covering at least a part of at least one of the surfaces of the polyolefin microporous film, wherein the thermoplastic polymer coating layer contains a thermoplastic polymer selected from the group consisting of a diene polymer, an acrylic polymer and a fluorine polymer.

Though the above-mentioned separators made of a heat-resistant resin have an excellent dimensional stability at high temperature and can be made thinner, they do not have the so-called shutdown characteristic, namely, a characteristic that the pores will be closed at high temperature, the separator cannot provide sufficient safety at an abnormality, specifically when the battery temperature rises rapidly due to an external short-circuit or an internal short-circuit.

As technology for solving such problems, for example, US9343719 (MITSUBISHI PLASTICS, INC.) shows a separator made of a porous layer containing metal oxide and a polymer binder which is laminated on at least one surface of a porous polyolefin resin film. The separator is produced by applying a coating solution containing the metal oxide, the polymer binder and a volatile acid on at least one surface of the porous polyolefin resin film.

New binders based on polyamide-imides (PAI) for use as coating of porous polyolefin resin film have been studied. However, most PAIs are only soluble in organic solvents such as N-methyl-2-pyrrolidone (NMP).

JP2016081711 (TDK CORP) discloses a separator comprising a porous layer including polyolefin as its matrix and a PAI-containing porous layer laminated on at least one face of the porous layer, the lamination being produced by casting a solution of said PAI in NMP onto said polyolefin.

Vinylidene fluoride (VDF) polymers are known in the art to be suitable as binders for the manufacture of electrodes and/or composite separators, and/or as coatings of porous separators for use in non-aqueous-type electrochemical devices such as batteries, preferably secondary batteries, and electric double layer capacitors, and the use of aqueous dispersions of VDF polymers possessing all required properties for being used in the field of components for secondary batteries, has been attempted.

For example, WO 2013/120858 (SOLVAY SPECIALTY POLYMERS ITALY SPA) discloses a process for manufacturing composite separators for batteries, said process comprising applying onto a substrate layer a coating composition comprising an aqueous latex comprising a vinylidene fluoride polymer and a non-electroactive inorganic filler material, such as alumina.

In the technical field of batteries, notably of lithium batteries, the problem of providing a coated separator capable of providing heat resistance properties and shutdown function to the separator substrate material and which, at the same time, reduces the weight of the separator and of the overall battery and are prepared by coating compositions including environmentally-friendly solvents such as water, is felt.

### Summary of invention

Surprisingly, the Applicant found that when a separator for an electrochemical cell is prepared by at least partially coating a substrate layer with an aqueous composition comprising at least a certain modified PAI and an aqueous latex comprising a vinylidene fluoride, said problem can be solved.

Thus, in a first aspect, the present invention relates to an aqueous composition [composition (C)] for use in the preparation of coated separators for electrochemical devices comprising:
i) at least one salified polyamide-imide polymer (PAI-Salt) comprising more than 50% by moles of recurring units R_{PAI} selected from the group consisting of units of any of general formulae (R_{PAI}-a) (R_{PAI}-b) and (R_{PAI}-c): 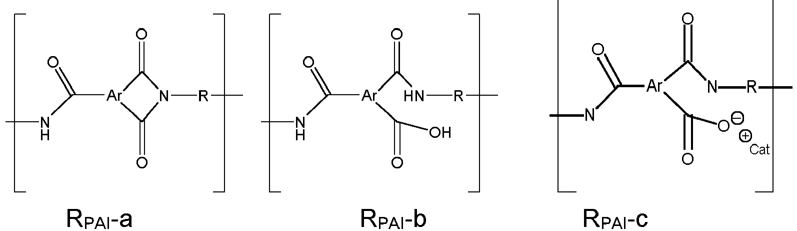
   provided that R_{PAI}-c represents at least 30 % by moles of recurring units in the salified polyamide-imide (PAI-Salt),
   wherein:
      - Ar is a trivalent aromatic group; preferably Ar is selected from the group consisting of the following structures: 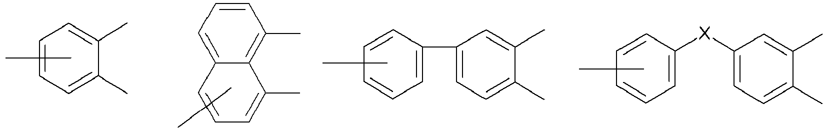
   and corresponding optionally substituted structures,
   wherein X is selected from the group consisting of -O-, -C(O)-, -CH₂-,-C(CF₃)₂-, -(CF₂)ₙ-, with n being an integer from 1 to 5;
   X is selected from the group consisting of -O-, -C(O)-, -CH₂-, -C(CF₃)₂-, and

      -(CF₂)ₚ-;
   n is an integer from 1 to 5;
   R is a divalent aromatic group selected from the group consisting of: 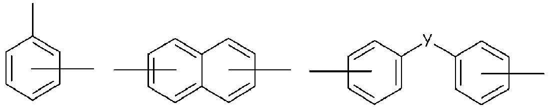 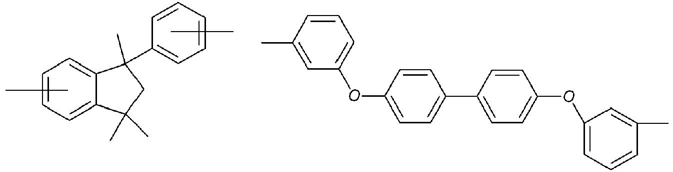
   and corresponding optionally substituted structures,
   Y is selected from the group consisting of -O-, -S-, -SO₂-, -CH₂-, -C(O)-,-C(CF₃)₂-, -(CF₂)_{q}-, q being an integer from 0 to 5; and
   Cat⁺ is a monovalent cation preferably selected from alkali metals cations, more preferably is selected from Na⁺, K⁺ and Li⁺, even more preferably is Li⁺;
ii) an aqueous dispersion comprising at least one aqueous medium (M) and at least one vinylidene fluoride (VDF) polymer [polymer (F)] under the form of primary particles having an average primary particle size of less than 1 µm, as measured according to ISO 22412 [latex (D)].

In a second aspect, the present invention provides a process for preparing the aqueous composition (C) as above defined, said process comprising mixing:
- at least one PAI-Salt as above defined; and
- a latex (D) as above defined.

In a third aspect, the present invention pertains to the use of the aqueous composition (C) of the invention in a process for the preparation of a coated separator for an electrochemical cell, said process comprising the following steps:
i) providing a non-coated substrate layer [layer (P)];
ii) providing composition (C) as defined above;
iii) applying said composition (C) obtained in step ii) at least partially onto at least one portion of said substrate layer (P), thus providing an at least partially coated substrate layer; and
iv) drying said at least partially coated substrate layer obtained in step iii) to provide a coated separator.

In a further aspect, the present invention relates to a coated separator for an electrochemical cell obtainable by the process as defined above.

In a further aspect, the present invention relates to an electrochemical cell, such as a secondary battery or a capacitor, comprising the coated separator as defined above.

### Description of embodiments

In the context of the present invention, the term "weight percent" (wt %) indicates the content of a specific component in a mixture, calculated as the ratio between the weight of the component and the total weight of the mixture. When referred to the recurring units derived from a certain monomer in a polymer/copolymer, weight percent (wt %) indicates the ratio between the weight of the recurring units of such monomer over the total weight of the polymer/copolymer. When referred to the total solid content (TSC) of a liquid composition, weight percent (wt %) indicates the ratio between the weight of all non-volatile ingredients in the liquid.

By the term "separator", it is hereby intended to denote a porous monolayer or multilayer polymeric material which electrically and physically separates electrodes of opposite polarities in an electrochemical cell and is permeable to ions flowing between them.

By the term "electrochemical cell", it is hereby intended to denote an electrochemical cell comprising a positive electrode, a negative electrode and a liquid electrolyte, wherein a monolayer or multilayer separator is adhered to at least one surface of one of said electrodes.

Non-limitative examples of electrochemical cells include, notably, batteries, preferably secondary batteries, and electric double layer capacitors.

For the purpose of the present invention, by "secondary battery" it is intended to denote a rechargeable battery. Non-limitative examples of secondary batteries include, notably, alkaline or alkaline-earth secondary batteries.

By the term "aqueous", it is hereby intended to denote a medium comprising pure water and water combined with other ingredients which do not substantially change the physical and chemical properties exhibited by water.

In the context of the invention, the term "substrate layer" is hereby intended to denote either a monolayer substrate consisting of a single layer or a multilayer substrate comprising at least two layers adjacent to each other.

In the formulae that follow, the floating amide bond indicates that the amide can be bonded to either of the closest carbons to the floating amide bond on the ring. In other words, 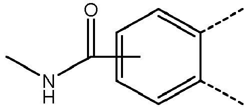 in each formula represents both 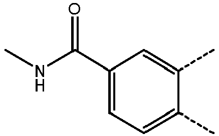 and

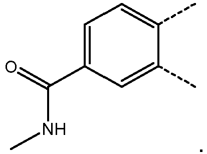

In a preferred embodiment of the present invention the Cat⁺ in the recurring units R_{PAI}-c is Li⁺, and the PAI-Salt is lithium polyamide-imide (LiPAI).

In some embodiments, recurring units R_{PAI}-a in the LiPAI are selected from at least one recurring unit of formula: 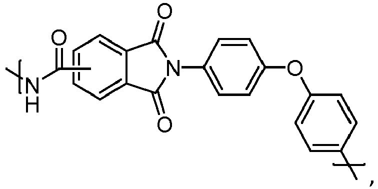 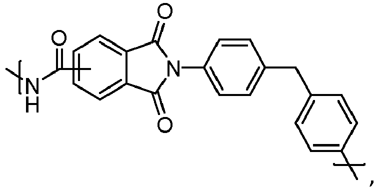 and

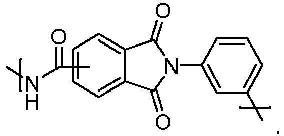

In some embodiments, recurring units R_{PAI}-b in the LiPAI are selected from at least one recurring unit of formula: 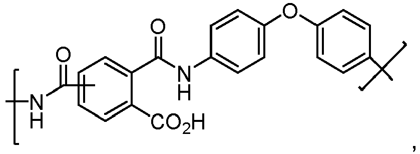 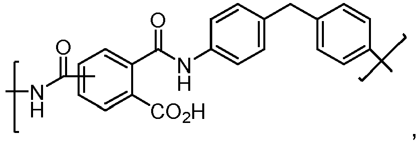 and

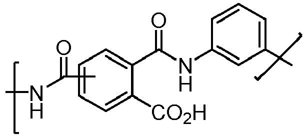

In some embodiments, recurring units R_{PAI}-c in the LiPAI are selected from at least one recurring unit of formula: 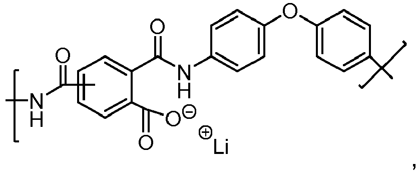 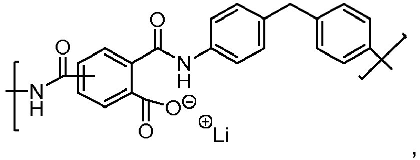 and

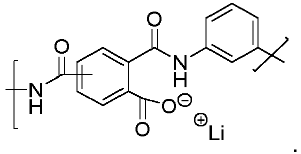

In some embodiments, the recurring units R_{PAI}-a, R_{PAI}-b, and R_{PAI}-c in the LiPAI are respectively units of formulae: 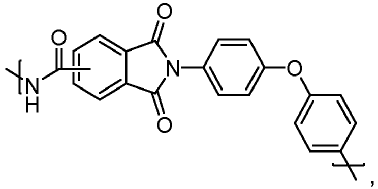 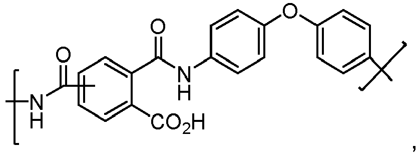 and

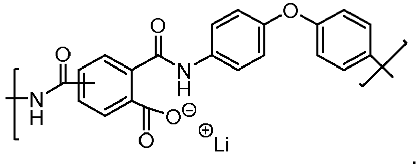

Preferably, recurring units R_{PAI}-c in the LiPAI are units of formula :

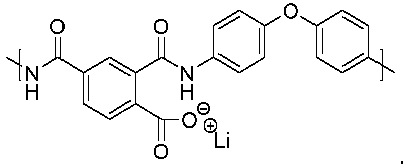

In some embodiments, the recurring units R_{PAI}-a, R_{PAI}-b, and R_{PAI}-c in the LiPAI are respectively units of formulae:

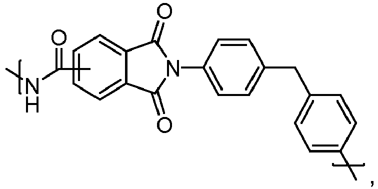

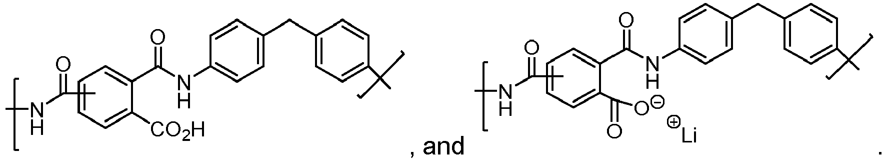

In some embodiments, the recurring units R_{PAI}-a, R_{PAI}-b, and R_{PAI}-c in the LiPAI are respectively units of formulae: 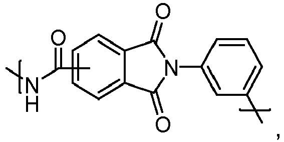 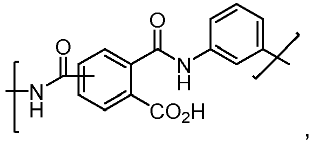 and

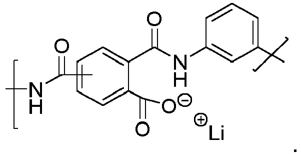

In some embodiments, the LiPAI comprises more than one, for example two, of each of recurring units R_{PAI}-a, R_{PAI}-b, and R_{PAI}-c. Accordingly, in some aspects the LiPAI comprises :
a) recurring units R_{PAI}-a of formulae: 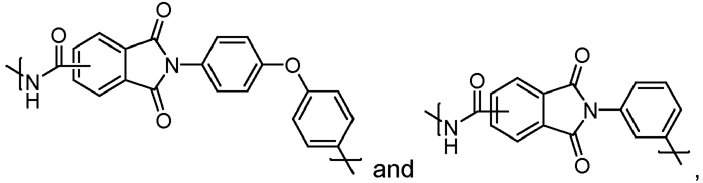
b) recurring units R_{PAI}-b of formulae: 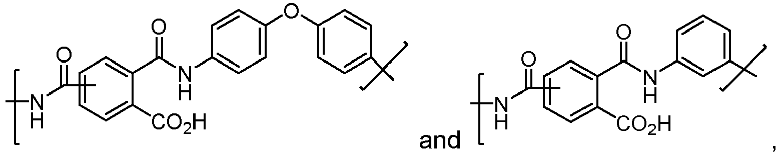 and
c) recurring units R_{PAI}-c of formulae:

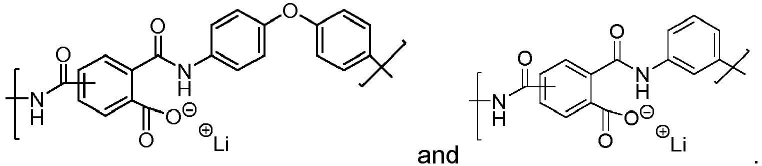

In some embodiments, the PAI-Salt includes less than 50 % by moles, preferably less than 49 % by moles, 45 % by moles 40 % by moles 30 % by moles 20 % by moles, 10 % by moles, 5 % by moles, 2 % by moles, 1 % by moles of the R_{PAI}-a recurring units. In some embodiments, the PAI-Salt is free of recurring units R_{PAI}-a.

In some embodiments, the PAI-Salt includes less than 70 % by moles, preferably less than 60 % by moles, 50 % by moles, 40 % by moles, 30 % by moles, 20 % by moles, 10 % by moles, 5 % by moles, 2 % by moles, 1 % by moles of recurring units R_{PAI}-b.

Preferably, the PAI-Salt includes at least 30 % by moles, 35 % by moles, 40 % by moles, 45 % by moles, 50 % by moles, 60 % by moles, 70 % by moles, 80 % by moles, 90 % by moles, 95 % by moles, 99 % by moles of recurring units R_{PAI}-c. Most preferably, all of the recurring units in the PAI-Saltare recurring units R_{PAI}-c.

In some embodiments, the mole ratio R_{PAI}-a / (R_{PAI}-b+ R_{PAI}-c) is 1.0 or less, preferably 0.9, 0.8. 0.7, 0.6, 0.5, 0.4. 0.3, 0.2, 0.1 or less.

In some embodiments, the mole ratio R_{PAI}-c/ (R_{PAI}-a + R_{PAI}-b) is 0.5, 0.6, 0.7, 0.8, 0.9, 1.0 or more. For example, the mole ratio R_{PAI}-c/ (R_{PAI}-a + R_{PAI}-b) is preferably greater than 2, 5, 10, 20, 30, 40, 50, 60, 70, 80, 90, 95, 99.

In a preferred embodiment, the amount of recurring units R_{PAI}-b ranges from 0 to 50 % by moles, and the amount of recurring units R_{PAI}-c ranges from 50 to 100 % by moles.

Determination of the relative amounts of recurring units R_{PAI}-b and R_{PAI}-c in the PAI-Salt can be performed by any suitable method. For example the amount of recurring units R_{PAI}-a (degree of imidization) can be assessed by NMR and the amount of recurring units R_{PAI}-b and R_{PAI}-c can be assessed by NMR, elemental analysis, or titration.

The PAI-Salt has an acid equivalent greater than 300 grams per equivalent (g/eq) of acid. Preferably, the PAI-Salt has an acid equivalent greater than 325 g/eq, more preferably greater than 350 g/eq, and most preferably at least 375 g/eq or more.

The PAI-Salt is water soluble. As used herein "water soluble" or "soluble in water" means that at least 99 wt % of the PAI-Salt, based on the total weight of the PAI-Salt, dissolves in deionized water to form a homogenous solution at 23°C with moderate stirring.

In some embodiments, the PAI-Salt has a number average molecular weight (Mn) of at least 1000 g/mol, preferably at least 2000 g/mol, more preferably at least 4000 g/mol. In some embodiments, the PAI-Salt has a number average molecular weight (Mn) of at most 10000 g/mol, preferably at most 8000 g/mol, more preferably at most 6000 g/mol.

The PAI-Salt used in the present invention can be prepared from the corresponding polyamide-imide (PAI) by neutralizing amic acid groups with a corresponding alkali metal salt in a solvent.

The LiPAI used in the present invention can be prepared from the corresponding polyamide-imide (PAI) by neutralizing amic acid groups with a lithium salt in a solvent.

As used herein, "polyamide-imide (PAI)" means any polymer comprising:
0 to 50 % by moles of at least one recurring unit R_{PAI}-a, of formula: 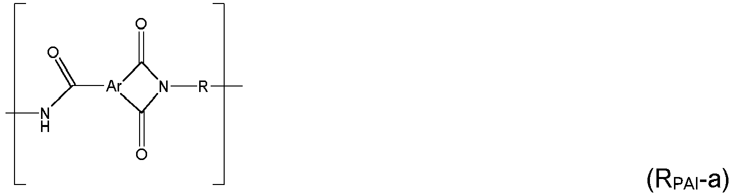 and
50 to 100 % by moles of at least one recurring unit R_{PAI}-b of formula: 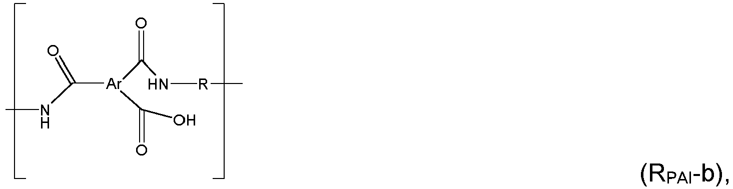
provided that recurring units R_{PAI}-a and R_{PAI}-b collectively represent more than 50 % by moles, preferably at least 60 % by moles, 75 % by moles, 90 % by moles, 95 % by moles, 99 % by moles of recurring units in the PAI, and Ar and R are as defined above.

Polyamide-imide polymers are available from Solvay Specialty Polymers USA, L.L.C. under the trademark, TORLON^{®} PAI.

PAI can be manufactured according to known methods in the art. For example, processes for preparing PAI polymers are disclosed in detail in British Patent No. 1,056,564, U.S. Pat. No. 3,661,832 and U.S. Pat. No. 3,669,937.

PAI can be manufactured by a process including the polycondensation reaction between at least one acid monomer chosen from trimellitic anhydride and trimellitic anhydride monoacid halides and at least one comonomer chosen from diamines and diisocyanates. In some embodiments, the molar ratio of the at least one acid monomer to the comonomer is 1:1.

Among the trimellitic anhydride monoacid halides, trimellitic anhydride monoacid chloride (TMAC) is preferred:

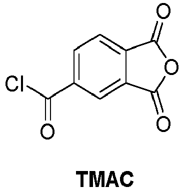

When polymerized, the acid monomers can exist in either an imide form or an amic acid form.

The comonomer can comprise one or two aromatic rings. Preferably, the comonomer is a diamine. More preferably, the diamine is selected from the group consisting of 4,4'-diaminodiphenylmethane (MDA), 4,4'-diaminodiphenylether (ODA), m-phenylenediamine (MPDA), and combinations thereof:

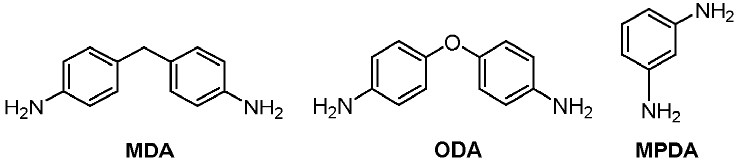

The alkali metal salt can be any salt of lithium capable of neutralizing amic acid groups.

In some embodiments for preparing LiPAI, the alkali metal salt is selected from the group consisting of lithium carbonate, lithium hydroxide, lithium bicarbonate, and combinations thereof, preferably lithium carbonate.

The solvent can be any solvent capable of dissolving the alkali metal salt and the resulting PAI-Salt.

In some embodiments for preparing LiPAI the solvent is preferably selected from at least one of water, NMP, and alcohols, such as, for example, methanol, isopropanol, and ethanol.

Preferably the solvent is selected from at least one of water, NMP, and alcohols, such as, for example, methanol, isopropanol, and ethanol.

Preferably, the solvent includes less than 5 wt %, preferably less than 2 wt %, preferably less than 1 wt % of NMP. More preferably, the solvent is free of NMP. Most preferably, the solvent is water.

Preferably the concentration of the lithium salt in the solvent ranges from 0.1 to 30 wt %, preferably from 1 to 30 wt %, more preferably 5 to 15 wt %, based on the total weight of the solvent and the lithium salt.

The LiPAI used in the present invention are prepared by using the concentration of the lithium salt in the solvent that allows providing at least 0.75 eq, 1 eq, 1.5 eq, 2 eq, 2.5 eq, 3 eq, 4, eq of lithium to acid groups.

The concentration of the lithium salt in the solvent preferably provides at most 5 eq, preferably at most 4 eq. of lithium to acid groups.

The solution of the alkali metal salt and the PAI (or PAI-Salt) is preferably heated to a temperature ranging from 50°C to 90°C, preferably from 60°C to 80°C, most preferably from 65°C to 75°C, preferably for a time ranging from few seconds to 6 hours.

The pH of the PAI-Salt obtained as above detailed is preferably lowered by adding to the reaction mixture after salification at least one source of acid, for example, as a mineral acid or as an organic acid such as acetic acid, formic acid, oxalic acid, benzoic acid, or as an acid generating species, such as a polymer having acidic sites.

Following salification, the concentration of the PAI-Salt in the solution preferably ranges from 1 to 20 wt %, preferably 5 to 15 wt %, most preferably 5 to 10 wt %, based on the total weight of the PAI-Salt and the solvent.

Polymer (F) may further comprise recurring units derived from at least one hydrophilic (meth)acrylic monomer (MA) of formula: 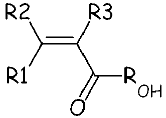 wherein each of R1, R2, R3, equal or different from each other, is independently an hydrogen atom or a C₁-C₃ hydrocarbon group, and R_{OH} is a hydroxyl group or a C₁-C₅ hydrocarbon moiety comprising at least one hydroxyl group.

The term "at least one hydrophilic (meth)acrylic monomer (MA)" is understood to mean that the polymer (F) may comprise recurring units derived from one or more than one hydrophilic (meth)acrylic monomer (MA) as above described. In the rest of the text, the expressions "hydrophilic (meth)acrylic monomer (MA)" and "monomer (MA)" are understood, for the purposes of the present invention, both in the plural and the singular, that is to say that they denote both one or more than one hydrophilic (meth)acrylic monomer (MA).

The hydrophilic (meth)acrylic monomer (MA) preferably complies with formula: 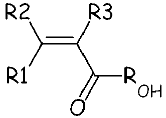 wherein each of R1, R2, R_{OH} have the meanings as above defined, and R3 is hydrogen; more preferably, each of R1, R2, R3 are hydrogen, while R_{OH} has the same meaning as above detailed.

Non limitative examples of hydrophilic (meth)acrylic monomers (MA) are notably acrylic acid, methacrylic acid, hydroxyethyl (meth)acrylate, hydroxypropyl(meth)acrylate; hydroxyethylhexyl(meth)acrylates.

The monomer (MA) is more preferably selected among:
- hydroxyethylacrylate (HEA) of formula: 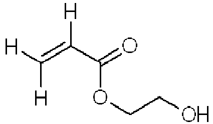
- 2-hydroxypropyl acrylate (HPA) of either of formulae: 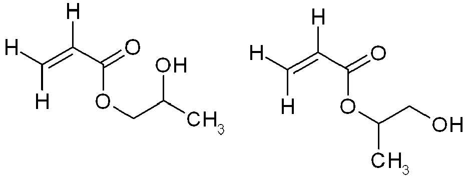
- acrylic acid (AA) of formula: 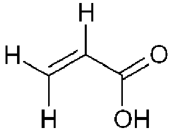
- and mixtures thereof.

More preferably, the monomer (MA) is AA and/or HEA, even more preferably is AA.

Determination of the amount of (MA) monomer recurring units in polymer (F) can be performed by any suitable method. Mention can be notably made of acid-base titration methods, well suited e.g. for the determination of the acrylic acid content, of NMR methods, adequate for the quantification of (MA) monomers comprising aliphatic hydrogens in side chains (e.g. HPA, HEA), of weight balance based on total fed (MA) monomer and unreacted residual (MA) monomer during polymer (F) manufacture and of IR methods.

Should at least one hydrophilic (meth)acrylic monomer (MA) be present, the polymer (F) comprises typically from 0.05 to 10.0 % moles, with respect to the total moles of recurring units of polymer (F).

The polymer (F) may further comprise recurring units derived from at least one other comonomer (CM) different from VDF and from monomer (MA), as above detailed.

The comonomer (CM) can be either a hydrogenated comonomer [comonomer (H)] or a fluorinated comonomer [comonomer (F)].

By the term "hydrogenated comonomer [comonomer (H)]", it is hereby intended to denote an ethylenically unsaturated comonomer free of fluorine atoms.

Non-limitative examples of suitable hydrogenated comonomers (H) include, notably, ethylene, propylene, vinyl monomers such as vinyl acetate, as well as styrene monomers, like styrene and p-methylstyrene.

By the term "fluorinated comonomer [comonomer (F)]", it is hereby intended to denote an ethylenically unsaturated comonomer comprising at least one fluorine atom.

The comonomer (CM) is preferably a fluorinated comonomer [comonomer (F)].

Non-limitative examples of suitable fluorinated comonomers (F) include, notably, the followings:
(a) C₂-C₈ fluoro- and/or perfluoroolefins such as tetrafluoroethylene (TFE), hexafluoropropylene (HFP), pentafluoropropylene and hexafluoroisobutylene;
(b) C₂-C₈ hydrogenated monofluoroolefins such as vinyl fluoride, 1,2-difluoroethylene and trifluoroethylene;
(c) perfluoroalkylethylenes of formula CH₂=CH-R_{f0}, wherein R_{f0} is a C₁-C₆ perfluoroalkyl group;
(d) chloro- and/or bromo- and/or iodo-C₂-C₆ fluoroolefins such as chlorotrifluoroethylene (CTFE);
(e) (per)fluoroalkylvinylethers of formula CF₂=CFOR_{f1}, wherein R_{f1} is a C₁-C₆ fluoro- or perfluoroalkyl group, e.g. -CF₃, -C₂F₅, -C₃F₇;
(f) (per)fluoro-oxyalkylvinylethers of formula CF₂=CFOX₀, wherein X₀ is a C₁-C₁₂ oxyalkyl group or a C₁-C₁₂ (per)fluorooxyalkyl group having one or more ether groups, e.g. perfluoro-2-propoxy-propyl group;
(g) fluoroalkyl-methoxy-vinylethers of formula CF₂=CFOCF₂OR_{f2}, wherein Rf₂ is a C₁-C₆ fluoro- or perfluoroalkyl group, e.g. -CF₃, -C₂F₅, -C₃F₇ or a C₁-C₆ (per)fluorooxyalkyl group having one or more ether groups, e.g.-C₂F₅-O-CF₃;
(h) fluorodioxoles of formula : 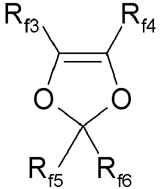 wherein each of Rf₃, Rf₄, Rf₅ and R_{f6}, equal to or different from each other, is independently a fluorine atom, a C₁-C₆ fluoro- or per(halo)fluoroalkyl group, optionally comprising one or more oxygen atoms, e.g. -CF₃, -C₂F₅,-C₃F₇, -OCF₃, -OCF₂CF₂OCF₃.

Most preferred fluorinated comonomers (F) are tetrafluoroethylene (TFE), trifluoroethylene (TrFE), chlorotrifluoroethylene (CTFE), hexafluoropropylene (HFP), perfluoromethyl vinyl ether (PMVE), perfluoropropyl vinyl ether (PPVE) and vinyl fluoride, and among these, HFP is most preferred.

Should at least one comonomer (CM) (preferably HFP) be present, the polymer (F) comprises typically from 0.05% to 14.5% by moles, preferably from 1.0% to 13.0% by moles, of recurring units derived from said comonomer(s) (CM), with respect to the total moles of recurring units of polymer (F).

However, it is necessary that the amount of recurring units derived from vinylidene fluoride in the polymer (F) is at least 85.0 mol %, preferably at least 86.0 mol%, more preferably at least 87.0 mol %, so as not to impair the excellent properties of vinylidene fluoride resin, such as chemical resistance, weatherability, and heat resistance.

According to certain embodiments, polymer (F) consists essentially of recurring units derived from VDF and from monomer (MA).

According to other embodiments, polymer (F) consists essentially of recurring units derived from VDF, from HFP and from monomer (MA).

Polymer (F) may still comprise other moieties such as defects, end-groups and the like, which do not affect nor impair its physico -chemical properties.

For the purpose of the present invention, the latex (D) is intended to denote an aqueous dispersion of a VDF copolymer derived from aqueous emulsion polymerization, which is distinguishable from a suspension that could be obtained by a conditioning step of such copolymer manufacture such as concentration and/or coagulation of aqueous latexes of the polymer.

The latex (D) in the composition (C) of the invention is thus distinguishable from an aqueous slurry prepared by dispersing powders a polymer or of a copolymer in an aqueous medium.

Latex (D) comprises the at least one polymer (F) in a weight percent amount ranging from 20% to 50%, over the total weight of latex (D).

Latex (D) may be obtained by aqueous emulsion polymerization of VDF and the hydrophilic (meth)acrylic monomer (MA) and, optionally, the at least one comonomer (CM) as above defined, in the presence of a persulfate inorganic initiator, at a temperature of at most 90°C, under a pressure of at least 20 bar.

The aqueous emulsion polymerization is typically carried out as described in the art (see e.g. EP3061145, WO 2018/011244 and WO 2013/010936).

For the purposes of the present invention, latex (D) can be used directly as obtained from the polymerization as above described. In this case, the latex (D) has a content of the at least one polymer (F) ranging from 20% to 30% by weight over the total weight of latex (D).

Optionally, subsequent to the emulsion polymerization, the method of making latex (D) may further include a concentration step. The concentration can be notably carried out with anyone of the processes known in the art. As an example, the concentration can be carried out by an ultrafiltration process well-known to those skilled in the art. See, for example, US 3037953 and US 4369266.

After the concentration step, the latex (D) may have a content of the at least one polymer (F) up to at most about 50% by weight.

Latex (D) may further comprise at least one non-ionic surfactant stabilizer, preferably belonging to the class of alkylphenols ethoxylates. The amount of non-ionic surfactant in latex (D) can range from 2 to 20 % by weight over the total weight of latex (D).

The aqueous medium (M) preferably contains essentially water.

The weight ratio between the at least one PAI-Salt and the at least one polymer (F) in composition (C) can be comprised between 2:98 and 98:2, preferably comprised between 30:70 and 90:10, more preferably from 50:50 to 90:10.

The total solid content (TSC) of the composition (C) of the present invention is typically comprised between 1 and 50 wt %, preferably from 2 to 30 wt %, more preferably from 5 to 25 wt % over the total weight of the composition (C). The total solid content of the composition (C) is understood to be cumulative of all non-volatile ingredients thereof, notably including PAI-Salt, polymer (F) and any solid, non-volatile additional additive.

Additional aqueous medium (M) can optionally be added in order to obtain a composition (C) having the TSC, as above defined.

Composition (C) may further comprise other ingredients, such as, for example, at least one wetting agent and/or at least one surfactant. As the wetting agent, mention can be made to polyhydric alcohols and to polyorganosiloxanes. As the surfactant, any of a cationic surfactant, an anionic surfactant, an amphoteric surfactant and a non-ionic surfactant can be used.

The composition (C) may further comprise one or more than one additional additive.

Optional additives in composition (C) include notably viscosity modifiers, as detailed above, anti-foams, non-fluorinated surfactants, and the like.

Preferably, the composition (C) of the present invention comprises:
i) at least one lithiated polyamide-imide polymer (LiPAI), and
ii) a latex (D) comprising water and a VDF/HFP/AA polymer.

In a second aspect, the present invention provides a process for preparing the aqueous composition (C) as above defined, said process comprising mixing:
- at least one PAI-Salt as above defined;
- a latex (D) as above defined; and
- optionally, additional aqueous medium (M).

In a preferred embodiment, PAI-Salt to be mixed to latex (D) is provided in the form of a solution in said aqueous medium (M).

Thus, in a preferred embodiment the process for preparing the aqueous composition (C) as above defined comprises mixing:
- at least one PAI-Salt as above defined with at least a portion of the at least one aqueous medium (M);
- a latex (D) as above defined; and
- optionally, additional aqueous medium (M).

According to this preferred embodiment, the PAI-Salt solution comprises at least one PAI-Salt as above defined and an aqueous medium (M). The aqueous medium (M) preferably contains essentially water. The solid content of the PAI-Salt solution is typically comprised between 1 % and 10 % wt, preferably from 2 % to 7 % wt, over the total weight of the PAI-Salt solution.

Optionally, the process according to this preferred embodiment can include a step of adding additional aqueous medium (M) to the mixture in order to achieve the required TSC.

The process for preparing the aqueous composition (C) may further comprise adding at least one wetting agent and/or at least one surfactant and one or more than one additional additives, as above defined.

In a third aspect, the present invention pertains to the use of the aqueous composition (C) of the invention in a process for the preparation of a separator for an electrochemical cell, said process comprising the following steps:
i) providing a non-coated substrate layer [layer (P)];
ii) providing composition (C) as defined above;
iii) applying said composition (C) obtained in step ii) at least partially onto at least one portion of said substrate layer (P), thus providing an at least partially coated substrate layer; and
iv) drying said at least partially coated substrate layer obtained in step iii).

The layer (P) can be made by any porous substrate or fabric commonly used for a separator in electrochemical device, comprising at least one material selected from the group consisting of polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, polyvinylidene fluoride, polyethyleneoxide, polyacrylonitrile, polyethylene and polypropylene, or a mixture thereof. Preferably, the layer (P) is polyethylene or polypropylene.

In step iii) of the process of the present invention, composition (C) obtained in step ii) is at least partially applied onto at least one portion of said substrate layer (P) by a technique selected from casting, spray coating, rotating spray coating, roll coating, doctor blading, slot die coating, gravure coating, inkjet printing, spin coating and screen printing, brush, squeegee, foam applicator, curtain coating, vacuum coating.

In an embodiment of the invention, the substrate layer (P) to be at least partially coated by the composition (C) is pre-heated before application of composition (C). Pre-heating is preferably carried out at a temperature ranging from 30 to 70°C.

Pre-heating the substrate layer (P) allows a faster and improved evaporation of the aqueous medium present in composition (C) in the following drying step iv). This may result in lower defects in the coated separator at the end of the process.

Application of composition (C) onto at least one portion of substrate layer (P) is carried out in an amount that provides an at least partially coated substrate layer wherein the coating has a wet thickness that is in the range of from 0.5 to 100 µm, preferably of from 2 to 50 µm.

In step iv) of the process of the invention, the at least partially coated substrate layer obtained in step iii) is dried preferably at a temperature comprised between 20°C and 200°C, preferably between 60°C and 100°C.

The thickness of the dry coating after the drying step iv) is preferably in the range of from about 0.1 to 10 µm, preferably from 1 and 5 µm.

The process of the present invention for the preparation of a coated separator may include a further step of hot pressing the coated separator obtained in step iv).

Hot-pressing is a method of performing heating and pressing simultaneously.

Hot-pressing may be carried out using metal roll, a roll press machine using a resilient roller and a flat plate press machine or the like. The temperature of the hot press is preferably from 60 to 110 ° C, more preferably from 70 to 105 ° C, particularly preferably is 90 to 100 °C.

Pressure of the heat press is preferably 0.1 to 10 MPa, more preferably from 0.3 to 5 MPa, still more preferably it is from 0.5 to 3 MPa. Time for applying the hot press ranges from few seconds to 50 minutes, depending on the equipment used for hot pressing. With the temperature, pressure and range of time for performing hot pressing, the separator can be firmly bonded.

In a further aspect, the present invention relates to a coated separator for an electrochemical cell comprising a substrate layer [layer (P)] at least partially coated with composition (C) as defined above.

The inventors found that the coated separator according to the invention show an improved shape stability at high temperatures in comparison to separators of the prior art.

In addition, the coated separators of the present invention have the shutdown function, which is highly desirable to improve the safety of batteries.

In still another aspect, the present invention relates to an electrochemical cell, such as a secondary battery or a capacitor, comprising the at least partially coated separator as defined above.

In still another embodiment, the present invention pertains to a secondary battery comprising:
- a positive electrode,
- a negative electrode,
- a coated separator,
wherein the coated separator is the coated separator of the invention.

Should the disclosure of any patents, patent applications, and publications which are incorporated herein by reference conflict with the description of the present application to the extent that it may render a term unclear, the present description shall take precedence.

The invention is described hereunder in more detail with reference to the following examples, which are provided with the purpose of merely illustrating the invention, with no intention to limit its scope.

### Experimental part

### Raw materials

Torlon^{®} AI-50 available from Solvay Specialty Polymers USA, LLC;
Trimellitic acid chloride (TMAC) and oxydianiline (ODA) available from Aldrich;
N-methylpyrrolidone (NMP) available from VWR International or Sigma Aldrich;
Latex (D-1): VDF-based dispersion comprising VDF-HFP-AA polymer containing 88 % by moles of VDF, 11 % by moles of HFP and 1% by moles of acrylic acid (AA) monomer, obtained as described in WO 2018/011244. Solid content = 25.5 wt %;
Latex (D-2): VDF-based dispersion comprising VDF-HFP-AA polymer containing 96.5 % by moles of VDF, 2.5 % by moles of HFP and 1% by moles of acrylic acid (AA) monomer, obtained as described in WO 2018/011244. Solid content = 25.5 wt %;
Sodium Dodecyl Sulfate (SDS) commercially available as Amepon from Ametech dissolved in H₂O (TSC=28%);
Polyolefin substrate (PO): commercially available as Tonen^{®} F20BHE, PE material, 20 µm, 45 % porosity.

### Preparation 1: TMAC-ODA (50-50) PAI Copolymer

ODA monomer (60.0 g, 0.3 moles) was charged into a 4-neck jacketed round-bottom flask fitted with overhead mechanical stirrer. NMP (250 mL) was charged to the flask and the mixture was cooled to 10 °C with mild agitation under a nitrogen atmosphere. The flask was fitted with a heated addition funnel to which TMAC (64.0 g, 0.3 moles) was charged and heated to a minimum of 100 °C. The molten TMAC was added to the solution of diamine in NMP at a rate sufficient not to exceed 40 °C with vigorous agitation. Once the addition was complete, external heating was applied to maintain 35-40 °C for 2 hours. Additional NMP (50 mL) was added and the reaction mixture discharged into a 500 mL beaker. The polymer solution was slowly added to water (4000 mL) in a stainless steel high-shear mixer. The precipitated polymer was filtered and washed multiple times with water to remove residual solvent and acid by-product. Degree of imidization, as measured by acid number titration was no higher than 50 % by moles.

### Preparation 2: Lithiated TMAC-ODA (50-50) Copolymer - 5 wt % Polymer and 4 eq. Lithium - LiPAl solution

Deionized water (188 mL) was charged to a 4-neck jacketed round-bottom flask fitted with overhead mechanical stirrer. Lithium carbonate (4.69 g, 0.067 moles) was added and the solution heated to 70 °C. With vigorous agitation, the TMAC-ODA (50-50) PAI (60.5 g at 20.7 % solids) was added in step-wise fashion, allowing each portion to dissolve prior to further addition. After the entire polymer was charged to the reactor, heating was continued for 1-2 hours, at which time the homogenous solution was discharged.

### Composition (C-1)

A composition was prepared by mixing the components in the following percentages:
Latex (D-1) = 27 wt %,
LiPAI solution of Preparation 2 = 63 wt %,
SDS = 10 wt %,
all percentages were calculated on the weight of the component with respect to the total solid content.

Then, the amount of water was adjusted to obtain a solid content of the composition of about 5 wt %.

### Composition (C-2)

A composition was prepared by mixing the components in the following percentages:
Latex (D-1) = 9 wt %,
LiPAI solution of Preparation 2 = 81 wt %,
SDS = 10 wt %,
all percentages were calculated on the weight of the component with respect to the total solid content.

Then, the amount of water was adjusted to obtain a solid content of the composition of about 5 wt %.

### Composition (C-3)

A composition was prepared by mixing the components in the following percentages:
Latex (D-1) = 63 wt %,
LiPAI solution of Preparation 2 = 27 wt %,
SDS = 10 wt %,
all percentages were calculated on the weight of the component with respect to the total solid content.

Then, the amount of water was adjusted to obtain a solid content of the composition of about 5 wt %.

### Comparative Composition (C-C1)

As preliminary stage, PVA was dissolved in deionized water at 10 wt % means of a shear mixing. Then alumina and the dispersing agent were added to the said mixture together and everything is submitted to high shear mixing at 3000 rpm for 30 min. Then, latex (D-2) was added together with the wetting agent and mixed at 500 rpm for 10 min.

The components were mixed in the following percentages:
alumina = 75 wt %,
latex (D-2) = 19.8 wt %,
PVA = 4 wt %,
dispersing agent 1.3 wt %,
all percentages were calculated on the weight of the component with respect to the total solid content.

Then, water was added to obtain a solid content of about 40 wt %.

### Comparative Composition (C-C2)

A composition was prepared by mixing the components in the following percentages:
Latex (D-1) = 9 wt %,
Torlon^{®} AI-50 = 81 wt %,
SDS = 10 wt %,
the percentages were calculated on the weight of the component with respect to the total solid content.

Then, the amount of water was adjusted to obtain a solid content of the composition of about 5 wt %.

### EXAMPLE 1

The PO was fixed at a glass support.

Casting of the composition obtained as in Preparation C-1 onto the PO was performed at 40 µm of wet thickness to achieve a final dry coating of 1-2 µm. Drying was performed at 70°C for 30 min in ventilated oven. Once dried, the same procedure was repeated for the second side of the PO.

### EXAMPLE 1a

The same procedure for preparing a coated separator as in Example 1 was followed. The coated PO was then hot-pressed at 1 MPa at 95°C for 25 minutes.

### EXAMPLE 2

The PO was fixed at a glass support.

Casting of the composition obtained as in Preparation C-1 onto the PO was performed at 40 µm of wet thickness to achieve a final dry coating of 1-2 µm. Drying was performed at room temperature for 15 hours. Once dried, the same procedure was repeated for the second side of the PO.

### EXAMPLE 2a

The same procedure for preparing a coated separator as in Example 2 was followed. The coated PO was then hot-pressed at 1 MPa at 95°C for 25 minutes.

### EXAMPLE 3

The PO was fixed at a glass support.

Casting of the composition obtained as in Preparation C-3 onto the PO was performed at 40 µm of wet thickness to achieve a final dry coating of 1-2 µm. Drying was performed at room temperature for 15 hours. Once dried, the same procedure was repeated for the second side of the PO.

### EXAMPLE 3a

The same procedure for preparing a coated separator as in Example 3 was followed. The coated PO was then hot-pressed at 1 MPa at 95°C for 25 minutes.

### EXAMPLE 4

The PO was fixed at a glass support.

Casting of the solution obtained as in Preparation C-3 onto one side of the PO was performed at 40 µm of wet thickness to achieve a final dry coating of 1-2 µm. Drying was performed at room temperature for 15 hours.

### EXAMPLE 4a

The same procedure for preparing a coated separator as in Example 4 was followed. The coated PO was then hot-pressed at 1 MPa at 95°C for 25 minutes.

### EXAMPLE 5

The PO was fixed at a glass support.

Casting of the solution obtained as in Preparation C-2 onto one side of the PO was performed at 40 µm of wet thickness to achieve a final dry coating of 1-2 µm. Drying was performed at room temperature for 15 hours.

### EXAMPLE 5a

The same procedure for preparing a coated separator as in Example 5 was followed. The coated PO was then hot-pressed at 1 MPa at 95°C for 25 minutes.

### EXAMPLE 6

The PO was fixed at a glass support.

Casting of the solution obtained as in Preparation C-1 onto one side of the PO was performed at 40 µm of wet thickness to achieve a final dry coating of 1-2 µm. Drying was performed at room temperature for 15 hours.

### EXAMPLE 6a

The same procedure for preparing a coated separator as in Example 6 was followed. The coated PO was then hot-pressed at 1 MPa at 95°C for 25 minutes.

### EXAMPLE 7

The PO was fixed at a glass support.

Casting of the solution obtained as in Preparation C-3 onto one side of the PO was performed at 40 µm of wet thickness to achieve a final dry coating of 1-2 µm. Drying was performed at room temperature for 15 hours.

### EXAMPLE 7a

The same procedure for preparing a coated separator as in Example 7 was followed. The coated PO was then hot-pressed at 1 MPa at 95°C for 25 minutes.

### COMPARATIVE EXAMPLE 1

The PO was fixed at a glass support.

Casting of the composition obtained as in Preparation C-C1 onto the PO was performed at 40 µm of wet thickness to achieve a final dry coating of 1-2 µm. Drying was performed at 70°C for 30 minutes in a ventilated oven. Once dried, the same procedure was repeated for the second side of the PO.

### COMPARATIVE EXAMPLE 2

The PO was fixed at a glass support.

Casting of the composition obtained as in Preparation C-C2 onto the PO was performed at 40 µm of wet thickness to achieve a final dry coating of 1-2 µm. Drying was performed at room temperature for 15 hours. Once dried, the same procedure was repeated for the second side of the PO.

### COMPARATIVE EXAMPLE 2a

The same procedure for preparing a coated separator as in Comparative Example 2 was followed. The coated PO was then hot-pressed at 1 MPa at 95°C for 25 minutes.

### Thermal shrinkage test:

The separators of the examples above were tested for the thermal shrinkage. The test was performed putting a specimen of coated PO having size of 6 cm (casting direction =CD) and 5 cm (transversal direction =TD) in a ventilated oven for 1 hour at 130°C. After the test, the dimensions CD and TD of the separator were checked and compared with the same before the treatment.

Measurement of shrinkage in casting direction (CD) and in trasversal direction (TD) of the coated separators of the invention were compared with those of the non-coated PO, with PO coated with a composition comprising a VDF-based dispersion, PVA and alumina, and with PO coated with a composition comprising a VDF-based dispersion and non-lithiated PAI (AI-50). The results are reported in Table 1.

**Table 1**

| | CD (%) | TD (%) |
|---|---|---|
| **Non-coated** | 24% | 29% |
| **Non-coated** | 22% | 26% |
| **Hot-pressed** | | |
| **1** | 10% | 20% |
| **1a** | 10% | 10% |
| **2** | 4% | 4% |
| **2a** | 4% | 4% |
| **3** | 4% | 4% |
| **3a** | 4% | 4% |
| **4** | 15% | 18% |
| **4a** | 15% | 18% |
| **5** | 6% | 8% |
| **5a** | 8% | 10% |
| **6** | 14% | 14% |
| **6a** | 10% | 10% |
| **7** | 17% | 22% |
| **7a** | 17% | 22% |
| **Comparative 1** | 9% | 14% |
| **Comparative 2** | 20% | 24% |
| **Comparative 2a** | 16% | 20% |

The data demonstrate that the coated separators according to the invention show a remarkably lower thermal shrinkage in comparison with non-coated separators and in comparison with coatings comprising a VDF-based dispersion and non-lithiated PAI (AI-50).

In addition, the coated separators according to the invention show a thermal shrinkage that is comparable with that of coated PO of the prior art, namely that of Comparative example 1.

### Weight of the coating layer to PO

The loading weight of the single side coated separators of examples 5 to 7 and of Comparative 1 and Comparative 2 necessary to provide a coated separator with minor or no defectse was evaluated. The results are shown in Table 2.

**Table 2**

| | **Loading (g/m²)** |
|---|---|
| **5** | 1.01 |
| **6** | 0.81 |
| **7** | 0.42 |
| **Comparative-1** | 8.74 |
| **Comparative-2** | 4.84 |

The data demonstrate that the coated separators according to the invention show a remarkably lower loading weight in comparison with the coated separator of the prior art, with the same quality of the coating; they may therefore represent a useful alternative to said coated separators bringing the advantage of possibly lowering the weight of the separator, due to the use of LiPAI instead of the solid inorganic particles, thus leading to an overall reduction of the weight of the battery.

### Adhesion:

In order to verify the adhesion of the coating to the PO, peeling tests on coated PO prepared as in Examples 5, 6 and 7 and Comparative example 2 were performed. An adhesive tape was attached to the surface of the coating and the coating was peeled off from substrate at 300 mm/min and 180°by a dynamometer that allowed the measurement of the force needed to peel off the adhesive tape from the sample. Results in terms of peeling strength are reported in Table 3.

**Table 3**

| | Peeling strength |
|---|---|
| **5** | 967±58 N/m |
| **6** | 875±29N/m |
| **7** | 62±13N/m |
| **Comparative 2** | 22±4 N/m |

The data demonstrate that the coated separators according to the invention show a remarkably higher adhesion to PO in comparison with coatings comprising a VDF-based dispersion and non-lithiated PAI (AI-50).

## Claims

1. An aqueous composition [composition (C)] for use in the preparation of coated separators for electrochemical devices comprising:
i) at least one salified polyamide-imide polymer (PAI-Salt) comprising more than 50% by moles of recurring units R_{PAI} selected from the group consisting of units of any of general formulae (R_{PAI}-a) (R_{PAI}-b) and (R_{PAI}-c): 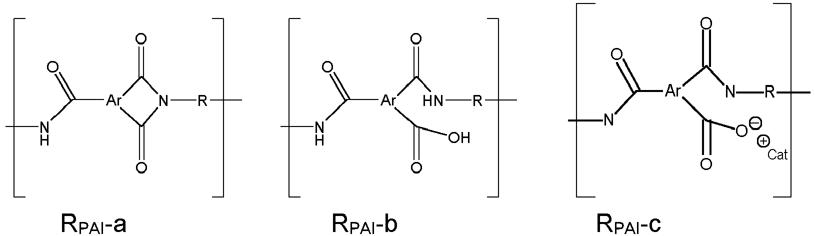
provided that R_{PAI}-c represents at least 30 % by moles of recurring units in the lithiated polyamide-imide (LiPAI),
wherein:
- Ar is a trivalent aromatic group; preferably Ar is selected from the group consisting of the following structures: 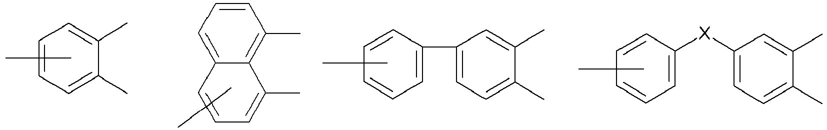
and corresponding optionally substituted structures,
wherein X is selected from the group consisting of -O-, -C(O)-, -CH₂-, -C(CF₃)₂-, -(CF₂)ₙ-, with n being an integer from 1 to 5;
X is selected from the group consisting of -O-, -C(O)-, -CH₂-, -C(CF₃)₂-, and -(CF₂)ₚ-;
n is an integer from 1 to 5;
R is a divalent aromatic group selected from the group consisting of: 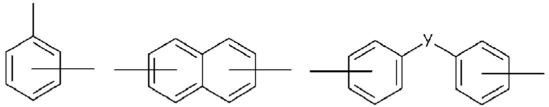 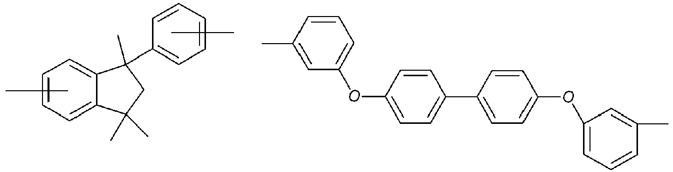
and corresponding optionally substituted structures, and
Y is selected from the group consisting of -O-, -S-, -SO₂-, -CH₂-, -C(O)-,-C(CF₃)₂-, -(CF₂)_{q}-, q being an integer from 0 to 5; and
Cat⁺ is a monovalent cation preferably selected from alkali metals cations, more preferably is selected from Na⁺, K+ and Li⁺, even more preferably is Li⁺;
ii) an aqueous dispersion comprising at least one aqueous medium (M) and at least one vinylidene fluoride (VDF) polymer [polymer (F)] under the form of primary particles having an average primary particle size of less than 1 µm, as measured according to ISO 22412 [latex (D)].

2. The composition according to claim 2 wherein the recurring units R_{PAI}-a, R_{PAI}-b, and R_{PAI}-c in the LiPAI are respectively units of formulae: 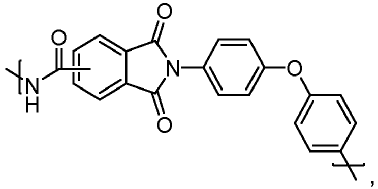 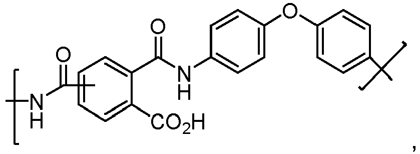 and

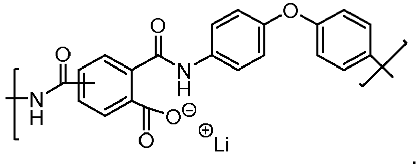

3. The composition according to claim 2 wherein the recurring units R_{PAI}-a, R_{PAI}-b, and R_{PAI}-c in the LiPAI are respectively units of formulae:

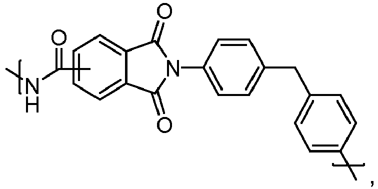

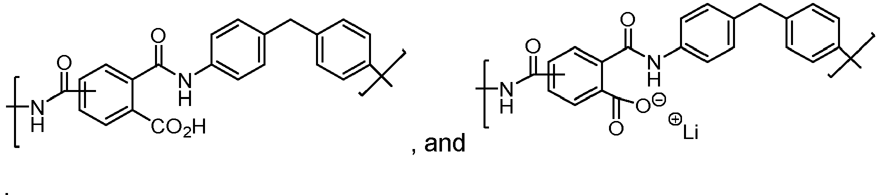

4. The composition according to claim 2 wherein the recurring units R_{PAI}-a, R_{PAI}-b, and R_{PAI}-c in the LiPAI are respectively units of formulae: 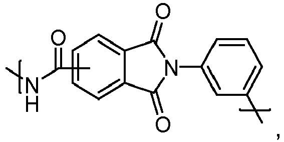 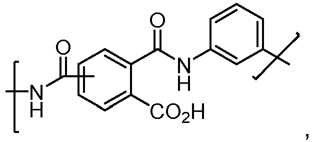 and

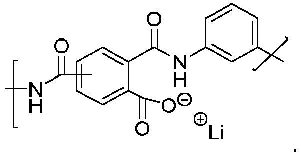

5. The composition according to claim 1 wherein Cat⁺ is Na⁺

6. The composition according to anyone of the preceding claims, wherein polymer (F) includes recurring units derived from at least one hydrophilic (meth)acrylic monomer (MA) of formula: 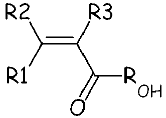 wherein each of R1, R2, R3, equal or different from each other, is independently an hydrogen atom or a C₁-C₃ hydrocarbon group, and R_{OH} is a hydroxyl group or a C₁-C₅ hydrocarbon moiety comprising at least one hydroxyl group.

7. The composition according to claim 6, wherein the monomer (MA) is selected among:
- hydroxyethylacrylate (HEA) of formula: 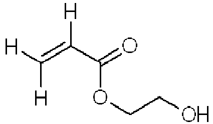 2-hydroxypropyl acrylate (HPA) of either of formulae: 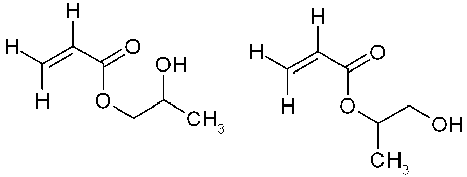
- acrylic acid (AA) of formula: 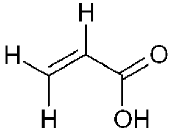
- and mixtures thereof.

8. The composition according to anyone of the preceding claims, wherein polymer (F) includes a fluorinated comonomer [comonomer (F)] selected from the group consisting of tetrafluoroethylene (TFE), trifluoroethylene (TrFE), chlorotrifluoroethylene (CTFE), hexafluoropropylene (HFP), perfluoromethyl vinyl ether (PMVE), perfluoropropyl vinyl ether (PPVE) and vinyl fluoride; preferably comonomer (F) is HFP.

9. The composition according to anyone of the preceding claims, which further includes at least one wetting agent and/or at least one surfactant.

10. The composition according to anyone of the preceding claims, wherein the weight ratio between the at least one PAI-Salt and the at least one polymer (F) in composition (C) is comprised between 2:98 and 98:2, preferably comprised between 30:70 and 90:10, more preferably from 50:50 to 90:10.

11. A process for preparing the aqueous composition (C) according to anyone of claims 1 to 10, said process comprising mixing:
- at least one salified polyamide-imide polymer (PAI-Salt) comprising more than 50% by moles of recurring units R_{PAI} selected from the group consisting of units of any of general formulae (R_{PAI}-a) (R_{PAI}-b) and (R_{PAI}-c): 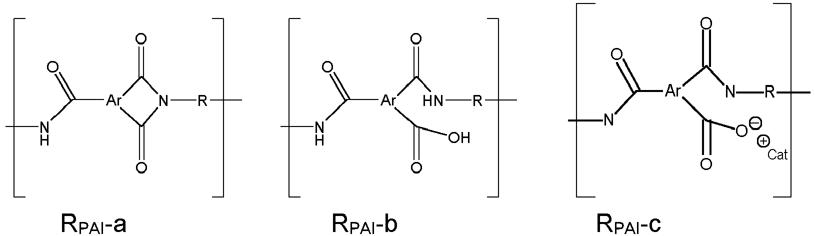 provided that R_{PAI}-c represents at least 30 % by moles of recurring units in the lithiated polyamide-imide (PAI-Salt),
wherein:
- Ar is a trivalent aromatic group; preferably Ar is selected from the group consisting of the following structures: 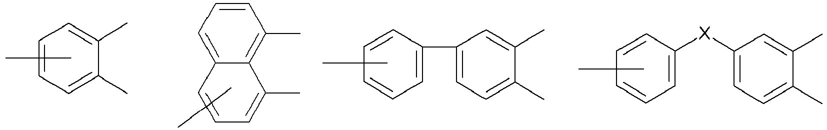
and corresponding optionally substituted structures,
wherein X is selected from the group consisting of -O-, -C(O)-, -CH₂-, -C(CF₃)₂-, -(CF₂)ₙ-, with n being an integer from 1 to 5;
X is selected from the group consisting of -O-, -C(O)-, -CH₂-, -C(CF₃)₂-, and -(CF₂)ₚ-;
n is an integer from 1 to 5;
R is a divalent aromatic group selected from the group consisting of: 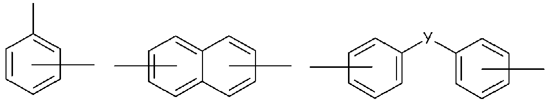 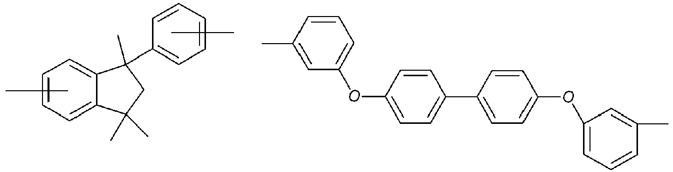
and corresponding optionally substituted structures, and
Y is selected from the group consisting of -O-, -S-, -SO₂-, -CH₂-, -C(O)-,-C(CF₃)₂-, -(CF₂)_{q}-, q being an integer from 0 to 5
Cat⁺ is a monovalent cation preferably selected from alkali metals cations, protonated primary secondary or tertiary ammonium cations, and quaternary ammonium cations, more preferably is selected from Na⁺, K+ and Li⁺, even more preferably is Li⁺; and
- an aqueous dispersion comprising at least one aqueous medium (M) and at least one vinylidene fluoride (VDF) polymer [polymer (F)] under the form of primary particles having an average primary particle size of less than 1 µm, as measured according to ISO 22412 [latex (D)].

12. A process for the preparation of a coated separator for an electrochemical cell, said process comprising the following steps:
i) providing a non-coated substrate layer [layer (P)];
ii) providing composition (C) according to anyone of claims 1 to 10;
iii) applying said composition (C) obtained in step ii) at least partially onto at least one portion of said substrate layer (P), thus providing an at least partially coated substrate layer; and
iv) drying said at least partially coated substrate layer obtained in step iii).

13. The process according to claim 12 wherein the layer (P) is a porous substrate comprising at least one material selected from the group consisting of polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, polyvinylidene fluoride, polyethyleneoxide, polyacrylonitrile, polyethylene and polypropylene, or a mixture thereof.

14. The process according in anyone of claims 12 to 13 which further includes a step ia) of pre-heating the substrate layer (P).

15. The process according in anyone of claims 12 to 14 which further includes a step v) of hot pressing the coated separator.

16. A coated separator for an electrochemical cell comprising a substrate layer [layer (P)] at least partially coated with composition (C) according to anyone of claims 1 to 10.

17. An electrochemical cell comprising the coated separator according to claim 16.

## Patentansprüche

1. Wässrige Zusammensetzung [Zusammensetzung (C)] zur Verwendung bei der Herstellung von beschichteten Separatoren für elektrochemische Vorrichtungen, umfassend:
i) mindestens ein versalztes Polyamidimidpolymer (PAI-Salz), umfassend mehr als 50 Mol-% Wiederholungseinheiten R_{PAI}, die aus der Gruppe bestehend aus Einheiten einer der allgemeinen Formeln (R_{PAI}-a), (R_{PAI}-b) und (R_{PAI}-c) ausgewählt sind: 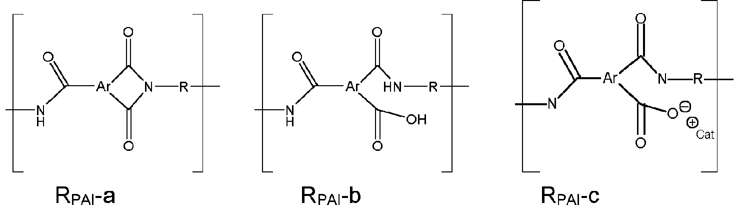
mit der Maßgabe, dass R_{PAI}-c mindestens 30 Mol-% der Wiederholungseinheiten in dem lithiierten Polyamidimid (LiPAI) ausmacht,
wobei:
- Ar für eine dreiwertige aromatische Gruppe steht; Ar vorzugsweise aus der Gruppe bestehend aus den folgenden Strukturen: 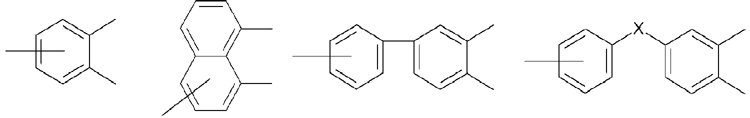
und entsprechenden gegebenenfalls substituierten Strukturen ausgewählt ist,
wobei X aus der Gruppe bestehend aus -O-, -C(O)-,-CH₂-, -C(CF₃)₂, -(CF₂)ₙ ausgewählt ist, wobei n eine ganze Zahl von 1 bis 5 ist;
X aus der Gruppe bestehend aus -O-, -C(O)-, -CH₂-, -C(CF₃)₂ und -(CF₂)ₚ ausgewählt ist;
n eine ganze Zahl von 1 bis 5 ist;
R für eine zweiwertige aromatische Gruppe steht, die aus der Gruppe bestehend aus 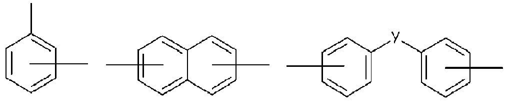 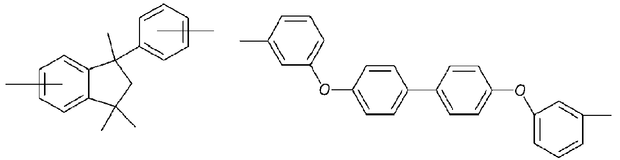
und entsprechenden gegebenenfalls substituierten Strukturen ausgewählt ist, und
Y aus der Gruppe bestehend aus -O-, -S-, -SO₂-,-CH₂-, -C(O)-, -C(CF₃)₂, -(CF₂)_{q} ausgewählt ist, wobei q eine ganze Zahl von 0 bis 5 ist; und
Cat⁺ für ein einwertiges Kation steht, das vorzugsweise aus Alkalimetallkationen ausgewählt ist, weiter bevorzugt aus Na⁺, K⁺ und Li⁺ ausgewählt ist und noch weiter bevorzugt für Li⁺ steht;
ii) eine wässrige Dispersion, umfassend mindestens ein wässriges Medium (M) und mindestens ein Vinylidenfluorid(VDF)-Polymer [Polymer (F)] in Form von Primärteilchen mit einer durchschnittlichen Primärteilchengröße von weniger als 1 µm gemäß Messung nach ISO 22412 [Latex (D)].

2. Zusammensetzung nach Anspruch 2, wobei es sich bei den Wiederholungseinheiten R_{PAI}-a, R_{PAI}-b und R_{PAI}-c in dem LiPAI um Einheiten der Formel: 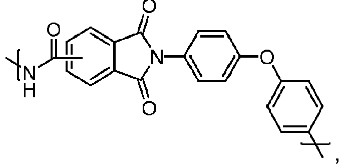 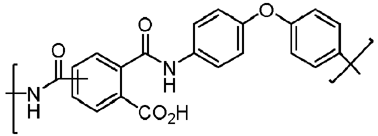 bzw. 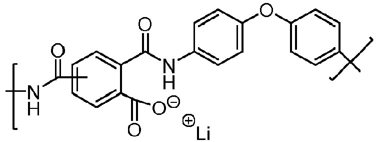 handelt.

3. Zusammensetzung nach Anspruch 2, wobei es sich bei den Wiederholungseinheiten R_{PAI}-a, R_{PAI}-b und R_{PAI}-c in dem LiPAI um Einheiten der Formel: 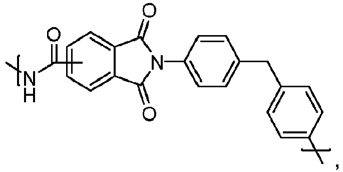 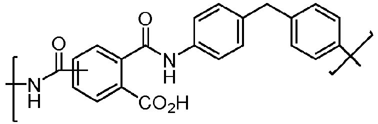 bzw. 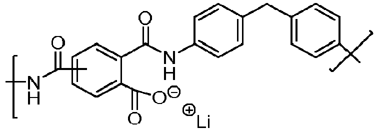 handelt.

4. Zusammensetzung nach Anspruch 2, wobei es sich bei den Wiederholungseinheiten R_{PAI}-a, R_{PAI}-b und R_{PAI}-c in dem LiPAI um Einheiten der Formel: 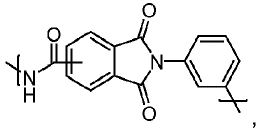 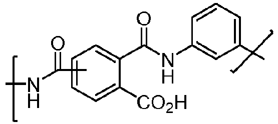 bzw. 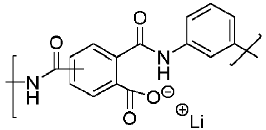 handelt.

5. Zusammensetzung nach Anspruch 1, wobei Cat⁺ für Na⁺ steht.

6. Zusammensetzung nach einem der vorhergehenden Ansprüche, wobei Polymer (F) Wiederholungseinheiten, die sich von mindestens einem hydrophilen (Meth)acryl-Monomer (MA) der Formel: 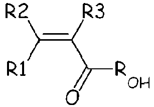
wobei R1, R2 und R3 gleich oder voneinander verschieden sind und unabhängig für ein Wasserstoffatom oder eine C₁-C₃-Kohlenwasserstoffgruppe stehen und R_{OH} für eine Hydroxylgruppe oder eine C₁-C₅-Kohlenwasserstoffgruppe mit mindestens einer Hydroxylgruppe steht,
ableiten, enthält.

7. Zusammensetzung nach Anspruch 6, wobei das Monomer (MA) aus
- Hydroxyethylacrylat (HEA) der Formel: 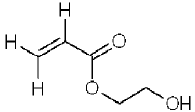
- 2-Hydroxypropylacrylat (HPA) einer der Formeln: 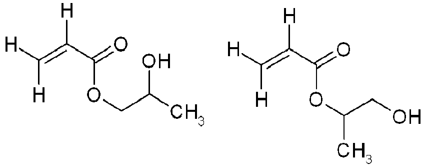
- Acrylsäure (AA) der Formel: 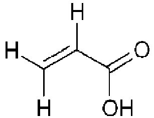
- und Mischungen davon
ausgewählt ist.

8. Zusammensetzung nach einem der vorhergehenden Ansprüche, wobei Polymer (F) ein fluoriertes Comonomer [Comonomer (F)] enthält, das aus der Gruppe bestehend aus Tetrafluorethylen (TFE), Trifluorethylen (TrFE), Chlortrifluorethylen (CTFE), Hexafluorpropylen (HFP), Perfluormethylvinylether (PMVE), Perfluorpropylvinylether (PPVE) und Vinylfluorid ausgewählt ist; und es sich bei dem Comonomer (F) vorzugsweise um HFP handelt.

9. Zusammensetzung nach einem der vorhergehenden Ansprüche, die ferner mindestens ein Netzmittel und/oder mindestens ein Tensid umfasst.

10. Zusammensetzung nach einem der vorhergehenden Ansprüche, wobei das Gewichtsverhältnis zwischen dem mindestens einen PAI-Salz und dem mindestens einen Polymer (F) in Zusammensetzung (C) zwischen 2:98 und 98:2 und vorzugsweise zwischen 30:70 und 90:10 liegt und weiter bevorzugt 50:50 bis 90:10 beträgt.

11. Verfahren zur Herstellung der wässrigen Zusammensetzung (C) nach einem der Ansprüche 1 bis 10, wobei das Verfahren das Mischen von:
i) mindestens einem versalzten Polyamidimidpolymer (PAI-Salz), umfassend mehr als 50 Mol-% Wiederholungseinheiten R_{PAI}, die aus der Gruppe bestehend aus Einheiten einer der allgemeinen Formeln (R_{PAI}-a), (R_{PAI}-b) und (R_{PAI}-c) ausgewählt sind: 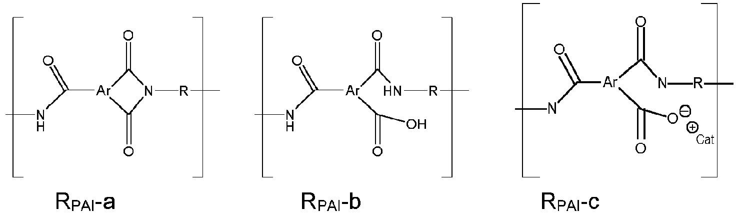
mit der Maßgabe, dass R_{PAI}-c mindestens 30 Mol-% der Wiederholungseinheiten in dem lithiierten Polyamidimid (LiPAI) ausmacht,
wobei:
- Ar für eine dreiwertige aromatische Gruppe steht; Ar vorzugsweise aus der Gruppe bestehend aus den folgenden Strukturen: 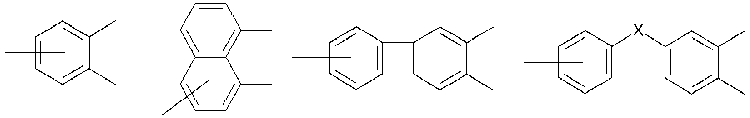
und entsprechenden gegebenenfalls substituierten Strukturen ausgewählt ist,
wobei X aus der Gruppe bestehend aus -O-, -C(O)-,-CH₂-, -C(CF₃)₂-, -(CF₂)ₙ- ausgewählt ist, wobei n eine ganze Zahl von 1 bis 5 ist;
X aus der Gruppe bestehend aus -O-, -C(O)-, -CH₂-, -C(CF₃)₂- und -(CF₂)ₚ- ausgewählt ist;
n eine ganze Zahl von 1 bis 5 ist;
R für eine zweiwertige aromatische Gruppe steht, die aus der Gruppe bestehend aus 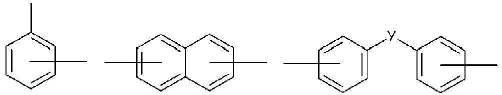 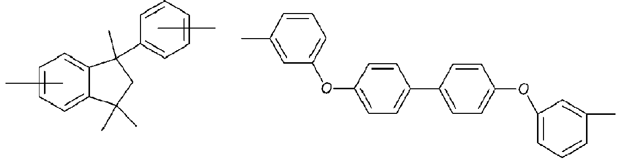
und entsprechenden gegebenenfalls substituierten Strukturen ausgewählt ist, und
Y aus der Gruppe bestehend aus -O-, -S-, -SO₂-,-CH₂-, -C(O)-, -C(CF₃)₂-, -(CF₂)_{q}- ausgewählt ist, wobei q eine ganze Zahl von 1 bis 5 ist;
Cat⁺ für ein einwertiges Kation steht, das vorzugsweise aus Alkalimetallkationen, protonierten primären, sekundären oder tertiären Ammoniumkationen, und quaternären Ammoniumkationen ausgewählt ist, weiter bevorzugt aus Na⁺, K⁺ und Li⁺ ausgewählt ist und noch weiter bevorzugt für Li⁺ steht; und
ii) einer wässrigen Dispersion, umfassend mindestens ein wässriges Medium (M) und mindestens ein Vinylidenfluorid(VDF)-Polymer [Polymer (F)] in Form von Primärteilchen mit einer durchschnittlichen Primärteilchengröße von weniger als 1 µm gemäß Messung nach ISO 22412 [Latex (D)];
umfasst.

12. Verfahren zur Herstellung eines beschichteten Separators für eine elektrochemische Zelle, wobei das Verfahren folgenden Schritte umfasst:
i) Bereitstellen einer unbeschichteten Substratschicht [Schicht (P)];
ii) Bereitstellung der Zusammensetzung (C) nach einem der Ansprüche 1 bis 10;
iii) zumindest teilweises Aufbringen der in Schritt ii) erhaltenen Zusammensetzung (C) auf mindestens einen Teil der Substratschicht (P), wodurch eine zumindest teilweise beschichteten Substratschicht bereitgestellt wird; und
iv) Trocknen der in Schritt iii) erhaltenen zumindest teilweise beschichteten Substratschicht.

13. Verfahren nach Anspruch 12, wobei es sich bei der Schicht (P) um ein poröses Substrat handelt, das mindestens ein Material, das aus der Gruppe bestehend aus Polyethylenterephthalat, Polybutylenterephthalat, Polyester, Polyacetal, Polyamid, Polycarbonat, Polyimid, Polyetheretherketon, Polyethersulfon, Polyphenylenoxid, Polyphenylensulfid, Polyethylennaphthalin, Polyvinylidenfluorid, Polyethylenoxid, Polyacrylnitril, Polyethylen und Polypropylen ausgewählt ist, oder eine Mischung davon umfasst.

14. Verfahren nach einem der Ansprüche 12 bis 13, das ferner einen Schritt ia) des Vorerhitzens der Substratschicht (P) umfasst.

15. Verfahren nach einem der Ansprüche 12 bis 14, das ferner einen Schritt v) des Heißpressens des beschichteten Separators umfasst.

16. Beschichteter Separator für eine elektrochemische Zelle, umfassend eine Substratschicht [Schicht (P)], die zumindest teilweise mit der Zusammensetzung (C) nach einem der Ansprüche 1 bis 10 beschichtet ist.

17. Elektrochemische Zelle, umfassend den beschichteten Separator nach Anspruch 16.

## Revendications

1. Composition aqueuse [composition (C)] à utiliser dans la préparation de séparateurs revêtus pour des dispositifs électrochimiques comprenant :
i) au moins un polymère de polyamide-imide salifié (sel de PAI) comprenant plus de 50 % en moles de motifs récurrents R_{PAI} choisis dans le groupe constitué par les motifs de n'importe laquelle des formules générales (R_{PAI}-a), (R_{PAI}-b) et (R_{PAI}-c) : 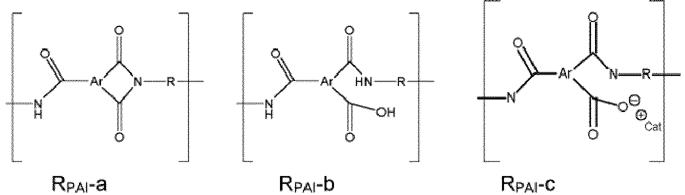
à condition que R_{PAI}-c représente au moins 30 % en moles des motifs récurrents dans le polyamide-imide lithié (LiPAI),
dans laquelle :
- Ar est un groupe aromatique trivalent ; de préférence, Ar est choisi dans le groupe constitué par les structures suivantes : 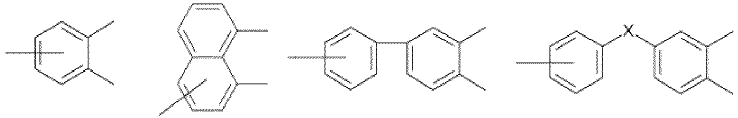
et les structures optionnellement substituées correspondantes,
dans lesquelles X est choisi dans le groupe constitué par -O-, -C(O)-, -CH₂-, -C(CF₃)₂-, -(CF₂)ₙ-, n étant un entier de 1 à 5 ;
X est choisi dans le groupe constitué par -O-, -C(O)-, -CH₂-, -C(CF₃)₂-, et -(CF₂)p- ;
n est un entier de 1 à 5 ;
R est un groupe aromatique divalent choisi dans le groupe constitué par : 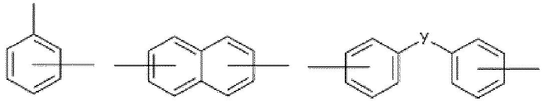 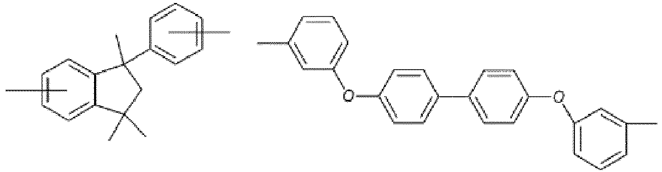
et les structures optionnellement substituées correspondantes, et
Y est choisi dans le groupe constitué par -O-, -S-, -SO₂-, -CH₂-, -C(O)-, -C(CF₃)₂-, -(CF₂)_{q}-, q étant un entier de 0 à 5 ; et
Cat⁺ est un cation monovalent de préférence choisi parmi les cations de métaux alcalins, mieux est choisi parmi Na⁺, K⁺ et Li⁺, mieux encore est Li⁺ ;
ii) une dispersion aqueuse comprenant au moins un milieu aqueux (M) et au moins un polymère de fluorure de vinylidène (VDF) [polymère (F)] sous la forme de particules primaires ayant une taille moyenne de particules primaires de moins de 1 µm, telle que mesurée conformément à la norme ISO 22412 [latex (D)].

2. Composition selon la revendication 2 dans laquelle les motifs récurrents R_{PAI}-a, R_{PAI}-b et R_{PAI}-c dans le LiPAI sont respectivement des motifs des formules : 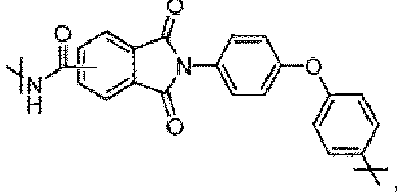 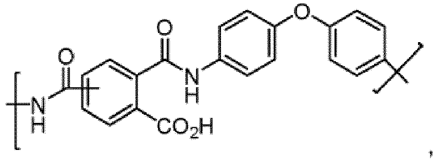 et

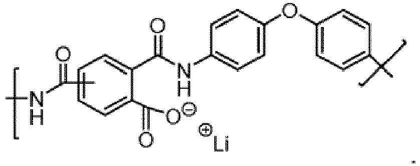

3. Composition selon la revendication 2 dans laquelle les motifs récurrents R_{PAI}-a, R_{PAI}-b et R_{PAI}-c dans le LiPAI sont respectivement des motifs des formules :

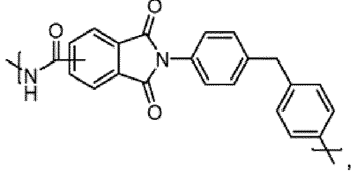

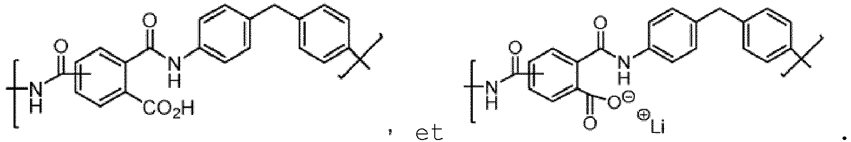

4. Composition selon la revendication 2 dans laquelle les motifs récurrents R_{PAI}-a, R_{PAI}-b et R_{PAI}-c dans le LiPAI sont respectivement des motifs des formules : 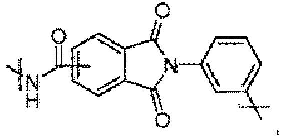 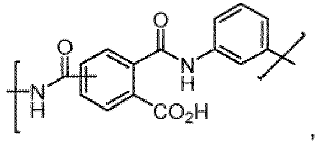 et

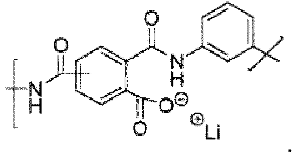

5. Composition selon la revendication 1 dans laquelle Cat⁺ est Na⁺.

6. Composition selon l'une quelconque des revendications précédentes, dans laquelle le polymère (F) comporte des motifs récurrents dérivés d'au moins un monomère (méth)acrylique hydrophile (MA) de formule : 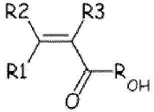 dans laquelle R1, R2 et R3, identiques ou différents les uns des autres, sont chacun indépendamment un atome d'hydrogène ou un groupe hydrocarboné en C₁-C₃, et R_{OH} est un groupe hydroxyle ou un groupement hydrocarboné en C₁-C₅ comprenant au moins un groupe hydroxyle.

7. Composition selon la revendication 6, dans laquelle le monomère (MA) est choisi parmi :
- l'acrylate d'hydroxyéthyle (HEA) de formule : 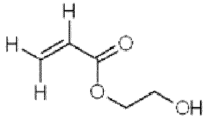
- l'acrylate de 2-hydroxypropyle (HPA) de l'une ou l'autre des formules : 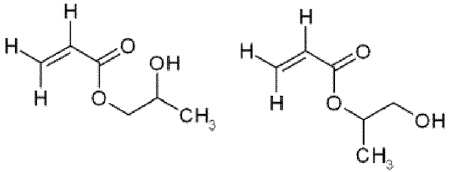
- l'acide acrylique (AA) de formule : 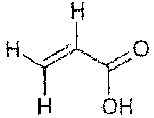
- et les mélanges de ceux-ci.

8. Composition selon l'une quelconque des revendications précédentes, dans laquelle le polymère (F) comporte un comonomère fluoré [comonomère (F)] choisi dans le groupe constitué par le tétrafluoro-éthylène (TFE), le trifluoroéthylène (TrFE), le chloro-trifluoroéthylène (CTFE), l'hexafluoropropylène (HFP), l'éther vinylique de perfluorométhyle (PMVE), l'éther vinylique de perfluoropropyle (PPVE) et le fluorure de vinyle ; de préférence, le comonomère (F) est le HFP.

9. Composition selon l'une quelconque des revendications précédentes, qui comporte en outre au moins un agent mouillant et/ou au moins un tensioactif.

10. Composition selon l'une quelconque des revendications précédentes, dans laquelle le rapport pondéral entre l'au moins un sel de PAI et l'au moins un polymère (F) dans la composition (C) est compris entre 2:98 et 98:2, de préférence compris entre 30:70 et 90:10, mieux encore entre 50:50 et 90:10.

11. Procédé de préparation de la composition aqueuse (C) selon l'une quelconque des revendications 1 à 10, ledit procédé comprenant le mélange :
- d'au moins un polymère de polyamide-imide salifié (sel de PAI) comprenant plus de 50 % en moles de motifs récurrents R_{PAI} choisis dans le groupe constitué par les motifs de n'importe laquelle des formules générales (R_{PAI}-a), (R_{PAI}-b) et (R_{PAI}-c) : 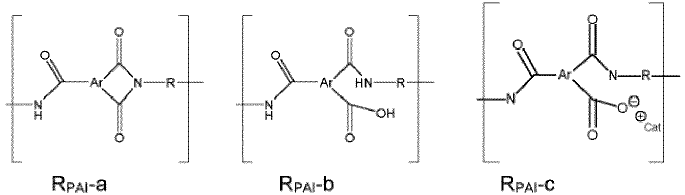
à condition que R_{PAI}-c représente au moins 30 % en moles des motifs récurrents dans le polyamide-imide lithié (LiPAI),
dans lequel :
- Ar est un groupe aromatique trivalent ; de préférence, Ar est choisi dans le groupe constitué par les structures suivantes : 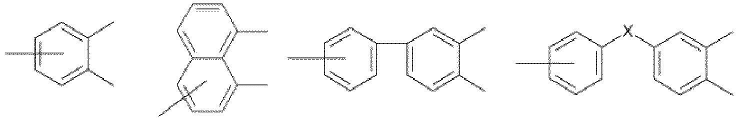
et les structures optionnellement substituées correspondantes,
dans lesquelles X est choisi dans le groupe constitué par -O-, -C(O)-, -CH₂-, -C(CF₃)₂-, -(CF₂)n-, n étant un entier de 1 à 5 ;
X est choisi dans le groupe constitué par -O-, -C(O)-, -CH₂-, -C(CF₃)₂-, et -(CF₂)p- ;
n est un entier de 1 à 5 ;
R est un groupe aromatique divalent choisi dans le groupe constitué par : 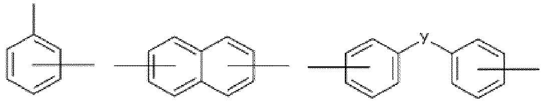 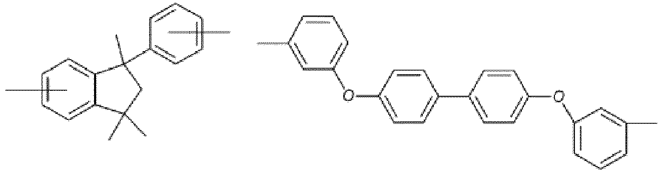
et les structures optionnellement substituées correspondantes, et
Y est choisi dans le groupe constitué par -O-, -S-, -SO₂-, -CH₂-, -C(O)-, -C(CF₃)₂-, -(CF₂)q-, q étant un entier de 0 à 5 ;
Cat⁺ est un cation monovalent de préférence choisi parmi les cations de métaux alcalins, les cations ammonium primaire, secondaire ou tertiaire protonés, et les cations ammonium quaternaire, mieux est choisi parmi Na⁺, K⁺ et Li⁺, mieux encore est Li⁺ ; et
- d'une dispersion aqueuse comprenant au moins un milieu aqueux (M) et au moins un polymère de fluorure de vinylidène (VDF) [polymère (F)] sous la forme de particules primaires ayant une taille moyenne de particules primaires de moins de 1 µm, telle que mesurée conformément à la norme ISO 22412 [latex (D)].

12. Procédé de préparation d'un séparateur revêtu pour une cellule électrochimique, ledit procédé comprenant les étapes suivantes :
i) obtention d'une couche de substrat non revêtue [couche (P)] ;
ii) obtention d'une composition (C) selon l'une quelconque des revendications 1 à 10 ;
iii) application de ladite composition (C) obtenue à l'étape ii) au moins partiellement sur au moins une partie de ladite couche de substrat (P), pour obtenir ainsi une couche de substrat au moins partiellement revêtue ; et
iv) séchage de ladite couche de substrat au moins partiellement revêtue obtenue à l'étape iii).

13. Procédé selon la revendication 12 dans lequel la couche (P) est un substrat poreux comprenant au moins un matériau choisi dans le groupe constitué par le téréphtalate de polyéthylène, le téréphtalate de polybutylène, le polyester, le polyacétal, le polyamide, le polycarbonate, le polyimide, la polyétheréthercétone, la polyéthersulfone, l'oxyde de polyphénylène, le sulfure de polyphénylène, le polyéthylènenaphtalène, le polyfluorure de vinylidène, l'oxyde de polyéthylène, le polyacrylonitrile, le polyéthylène et le polypropylène, ou un mélange de ceux-ci.

14. Procédé selon l'une quelconque des revendications 12 à 13 qui comporte en outre une étape ia) de préchauffage de la couche de substrat (P).

15. Procédé selon l'une quelconque des revendications 12 à 14 qui comporte en outre une étape v) de pressage à chaud du séparateur revêtu.

16. Séparateur revêtu pour une cellule électrochimique comprenant une couche de substrat [couche (P)] au moins partiellement revêtue d'une composition (C) selon l'une quelconque des revendications 1 à 10.

17. Cellule électrochimique comprenant le séparateur revêtu selon la revendication 16.
